# EUROPEAN PATENT SPECIFICATION

(11) **EP 2 765 083 B1**
(45) Date of publication and mention of the grant of the patent: **13.01.2016**
(21) Application number: 13382209.8
(22) Date of filing: 03.06.2013
(51) Int. Cl.: B65B 69/00, B65G 65/40, B65G 69/20, G01F 23/296, B67D 7/78, B67D 7/82, G01F 23/02

(54) **Station for emptying a bulk fluid or pasty product container, particularly an IBC**
Station zum Entleeren eines Schüttgutbehälters für flüssige oder zähflüssige Produkte, insbesondere IBC
Poste de vidage d'un récipient contenant un produit pâteux ou un fluide en vrac, en particulier un IBC

(30) Priority: 08.02.2013 ES 201330159
(43) Date of publication of application: 13.08.2014
(73) Proprietor: MANGRA, S.A., 08560 Manlleu (ES)
(72) Inventor: Mallarach Capdevila, Joan, 08560 Manlleu (ES)
(74) Representative: Sugrañes Patentes y Marcas

(56) References cited:
- GB-A- 301 629
- GB-A- 1 246 454
- JP-A- 2009 137 653
- US-A- 3 143 108
- US-A- 4 259 975
- US-A- 5 344 048
- US-A- 5 531 360
- US-A- 5 967 358
- MARCUS RIPP ET AL: "Influence of temperature on the flow properties of bulk solids", CHEMICAL ENGINEERING SCIENCE, vol. 65, no. 13, 31 March 2010 (2010-03-31), pages 4007-4013, XP055103750, ISSN: 0009-2509, DOI: 10.1016/j.ces.2010.03.046

## Description

### Technical Field of the Invention

The invention relates to a station for emptying a bulk fluid or pasty product container of the type known as IBC (Intermediate Bulk Container).

### Background of the Invention

The acronym IBC is used for designating an intermediate bulk container, also known simply as a bulk container, which is no more than a container used for transporting and storing bulk fluid products. The most common container type is that formed by a high density polyethylene bag with outer steel tube reinforcement. The conventional capacity of such tanks ranges from 400 to 1,000 liters according to the intended industrial use of the fluid or the nature thereof, which tends to be for food, cosmetic or chemical fluid.

A known accessory for such tanks are heaters in the form of thermal liners used for enveloping the container so that its contents are kept at an ideal temperature for emptying the container or for the immediate use thereof.

The first case is typical in fluids which are in a semi-solid or pasty state at room temperature.

Heaters have the drawback of not directly heating the fluid contained therein, rather they heat the bag, i.e., the walls of the container, which in turn heat the fluid in direct contact with the walls through transfer. The temperature gradient changes when moving away from the walls of the container such that the fluid mass contained in the center of the container does not reach or takes a long time to reach the desired temperature. Ultimately, in addition to not assuring uniform heating of the fluid, these heaters are less efficient and not as fast as is sometimes required.

One example of such thermal liners is described, for example, in patent documents WO 2007038438, WO 2007101061 and US 2008067176.

Alternatively, the use of devices which are coupled to the upper mouth of the IBC and comprise rods or pins extending towards the center of the IBC and supporting electric resistances, thermostats or level sensors which are submerged in the contents of the IBC is also known. Experience has shown that for very viscous fluids, the heat supplied by the resistance is only transferred to the medium surrounding the resistance and does not reach the contents away from the resistance.

On the other hand, stations for emptying the containers are also known as the accessories. Known stations share the feature of having means to allow the container to be placed thereon and they have a collecting tray the bottom of which is located below the container. Examples of stations formed by a single, plastic-molded body are described in patent documents US 6745704, US 2003226479 and EP 0703161. Document US 5344048 further discloses an alternative embodiment of a station sharing these known features.

The first objective of the invention is to disclose an emptying station whereby an IBC can be emptied, the contents of which require a heat supply either because its fluidity must be increased or because it is desirable for the subsequent use made of the fluid.

Another objective of the invention is to improve the thermal efficiency of the known solutions. The emptying station must also speed up the emptying operation, all this assuring compliance with safety standards, the operators being prevented from contacting the contents of the IBC.

### Disclosure of the Invention

The proposed station for emptying a bulk fluid or pasty product container, particularly an IBC (Intermediate Bulk Container), comprises a frame with legs prepared for receiving thereon the stable support of the container which is raised with respect to the floor.

The station is **characterized in that** the frame comprises, below the support plane (X) of the container, a tank, which acts like an intermediate buffer tank intended for receiving the fluid of the container before the latter is drained out, the tank having a double bottom: wherein the first bottom is funnel-shaped and ends in a spout, and the second bottom together with the first bottom determines a lower chamber suitable for containing a thermal fluid, the spout through which the contents of the container can be transferred to the outside after passing through the tank goes through said lower chamber.

According to another feature of the invention, the station comprises heating means for heating the lower chamber containing the thermal fluid.

The invention contemplates the station being equipped with a system for controlling and regulating the temperature of the fluid contained in the tank, comprising a temperature probe for checking the temperature in the tank and means for acting on the heating means, through a thermostat, depending on the value of the signal generated by said probe.

According to another feature of the invention, the lower point of the lower chamber hydraulically communicates with a vertical conduit provided with an inspection hole for measuring the level of thermal fluid in the lower chamber.

In one variant of the invention, the tank has an upper lid provided with at least two openings, one for the connection of the emptying conduit of the container and another for providing the tank with an outlet vent.

The outlet vent preferably comprises a flue at the base of which there is installed a tuning fork-type level sensor.

According to another feature of the invention, the frame is provided with at least two support rollers for receiving thereon the stable support of the container.

The second bottom is preferably thermally insulated by means of a lower lid made of insulating material.

### Brief Description of the Drawings

Figure 1 is a perspective view of the emptying station according to the invention with an IBC duly coupled to the station;
Figure 2 is a side view of the station shown in Figure 1; and
Figure 3 is a view according to vertical section plane AA indicated in Figure 2.

### Detailed Description of an Embodiment

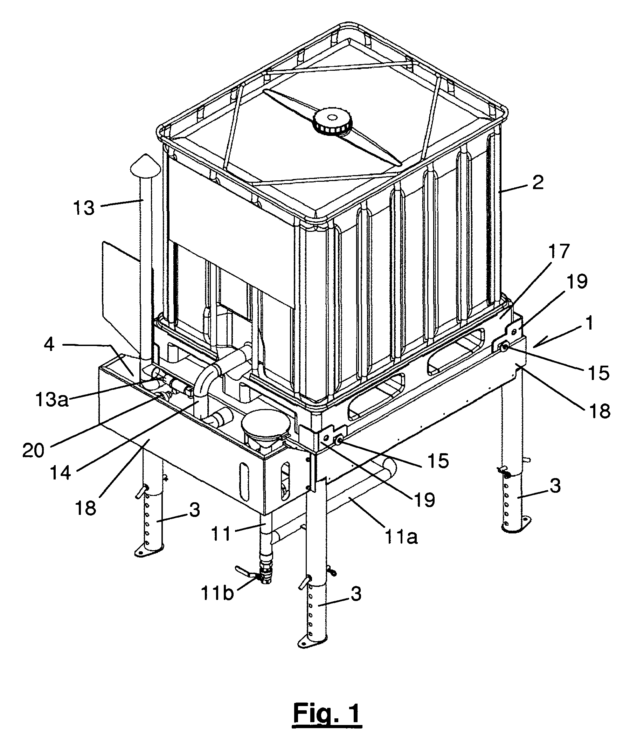

Figure 1 shows a station 1 for emptying a conventional IBC 2. The station 1 is particularly suitable for emptying containers 2 containing fluid products having a high viscosity at room temperature, such as methionine, molasses, oil, fat, lysine or choline chloride, for example.

The station 1 comprises a frame 18 made of carbon steel with four height-adjustable legs 3 capable of supporting the weight of an IBC having 1000 liter capacity for a fluid with a higher density than water.

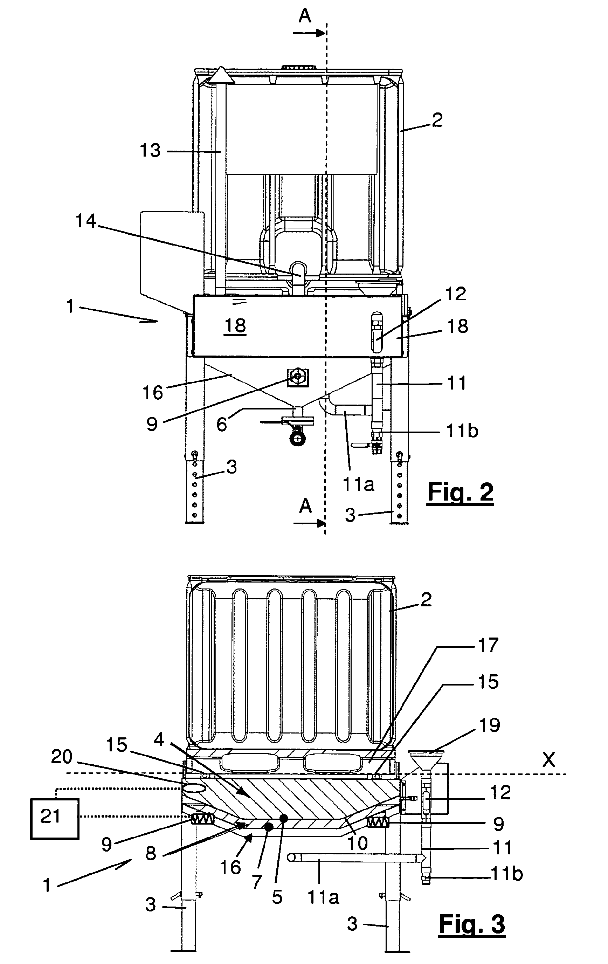

In the example of the drawings, the frame 18 has the two rollers 15 which determine a support plane X (see Figure 3) for the container 2. The rollers 15 form a simple grate on which the container 2 is arranged together with the pallet used for lifting and transporting same. Once the container is placed on the frame 18, the rollers 15 allow the assembly formed by the pallet and the container 2 to be able to slide so that it ends up being tightly fitted on the mentioned frame 18, which can be provided with a raised edge or rim, or simply with corner pieces 19 (see Figure 1) made of sheet metal, to prevent the accidental fall of the container 2.

Once the container 2 is placed on the frame 18, the container 2 is raised with respect to the floor a height comprised between 523 mm and 923 mm according to the degree of extension which is selected in the legs 3.

Now making reference to Figure 3, the station 1 is **characterized in that** the frame 18 comprises, below the support plane (X) of the container, a double bottom tank 4, the tank 4 being intended for receiving the fluid of the container 2 before the latter is drained out.

The tank 4 is a double bottom tank. The first bottom 5 is funnel-shaped and ends in a spout 6 (see Figure 2); and the second bottom 7 together with the first bottom 5 determines a lower chamber 8 which contains a thermal fluid 10, and the spout 6 through which the contents of the container 2 can be transferred to the outside after passing through the tank 4 going through said lower chamber 8. The invention contemplates providing the station with supply tanks 4 or reservoirs having a capacity of 200 to 300 liters. A suitable material is AISI 316 stainless steel.

The lower chamber 8 has capacity for housing about 66 liters of thermal oil 10. To increase and maintain the temperature of the thermal oil 10, the station 1 is provided with heating means 9 formed in the example by two electric resistances of 1,500 W each located adjacent to or juxtaposed with the second bottom 7 which closes the lower chamber 8 in the lower portion. Below this second bottom 7 and covering the heating means 9 there is arranged a lower lid 16 made of insulating material, such as a 40-mm thick mineral wool and 0.8 mm aluminum sheet finish fastened to the outer face of the mentioned second bottom 7 with screws and/or rivets.

As shown in Figures 1 and 2, the lower point of the lower chamber 8 containing the thermal oil 10 hydraulically communicates through a tubular section 11a with a vertical conduit 11 that opens into an upper funnel 19 for loading the thermal fluid 10 and is provided with an inspection hole 12 for measuring the level of the thermal fluid 10 in the lower chamber 8. A lower branch 11 b of the vertical tube 11 has a valve to enable emptying thermal oil 10 out of the lower chamber 8 of the station 1.

The exemplary station 1 is further provided with a system 21 for controlling and regulating the temperature of the fluid contained in the tank 4, comprising a temperature probe 20 (see Figure 1) measuring the temperature of the fluid in the tank 4, and means for acting on the heating means 9 for heating the thermal fluid 10, through a thermostat, depending on the value of the signal generated by the probe 20. By using an electronic thermostat, the system can be managed in an intelligent manner and predetermined maximum and minimum threshold values can be programmed depending on the nature of the fluid stored in the IBC, minimum times between activations can be programmed, etc. Though not depicted, the system uses a control board for the user to control same.

The probe 20 is preferably a PT-100 sensor the operation of which is based on the variation of resistance with respect to temperature changes of the medium.

The tank 4 has an upper lid provided with two openings, one for the connection of the emptying conduit 14 of the container 2 and the other for providing the tank 4 with an outlet vent 13. In the example, the outlet vent 13 is in fact a flue at the base of which there is installed a tuning fork-type level sensor 13a for controlling the level of fluid in the tank 4.

Advantageously, only a specific volume of the fluid originally contained in the container 2 is heated with the emptying station 1. Furthermore, the fluid is not heated inside the container but rather heated as it passes through the tank 4, which acts like an intermediate buffer tank, which can be heated up in a more efficient manner than the container 2 simply because it has a metal wall.

Essentially, the fluid is heated by means of the station 1 as it is extracted from the container 2 and remains in the tank 4 before being transferred to the outside. This is an operation which can be performed continuously or at low speeds. Furthermore, using thermal fluid to transfer heat to the volume of fluid contained in the tank 4 is more efficient than using conventional thermal liners.

## Claims

1. A station (1) for emptying a bulk fluid or pasty product container (2), particularly an IBC (Intermediate Bulk Container), comprising a frame (18) with legs (3) prepared for receiving thereon the stable support of the container which is raised with respect to the floor, **characterized in that** the frame comprises, below the support plane (X) of the container, a tank (4), which acts like an intermediate buffer tank intended for receiving the fluid of the container (2) before the latter is drained out, the tank (4) having a double bottom: wherein the first bottom (5) is funnel-shaped and ends in a spout (6), and the second bottom (7) together with the first bottom determines a lower chamber (8) suitable for containing a thermal fluid (10), the spout through which the contents of the container can be transferred to the outside after passing through the tank goes through said lower chamber (8).

2. The station (1) for emptying a bulk fluid or pasty product container according to claim 1, **characterized in that** it comprises heating means (9) for heating the lower chamber (8) containing the thermal fluid (10).

3. The station (1) for emptying a bulk fluid or pasty product container according to the preceding claim, **characterized in that** it is provided with a system (21) for controlling and regulating the temperature of the fluid contained in the tank (4), comprising a temperature probe (20) for checking the temperature in the tank (4) and means for acting on the heating means (9), through a thermostat, depending on the value of the signal generated by the probe.

4. The station (1) for emptying a bulk fluid or pasty product container according to any one of the preceding claims, **characterized in that** the lower point of the lower chamber (8) hydraulically communicates with a vertical conduit (11) provided with an inspection hole (12) for measuring the level of thermal fluid (10) in the lower chamber (8).

5. The station (1) for emptying a bulk fluid or pasty product container according to any one of the preceding claims, **characterized in that** the tank (4) has an upper lid provided with an opening for the connection of the emptying conduit (14) of the container (2) and an opening for providing the tank (4) with an outlet vent (13).

6. The station (1) for emptying a bulk fluid or pasty product container according to the preceding claim, **characterized in that** the outlet vent (13) comprises a flue at the base of which there is installed a tuning fork-type level sensor (13a).

7. The station (1) for emptying a bulk fluid or pasty product container according to any one of the preceding claims, **characterized in that** for receiving thereon the stable support of the container (2), the frame is provided with at least two support rollers (15).

8. The station (1) for emptying a bulk fluid or pasty product container according to any one of the preceding claims, **characterized in that** the second bottom (7) is thermally insulated by means of a lower lid (16) made of insulating material.

## Patentansprüche

1. Station (1) zum Entleeren eines Schüttgutbehälters für flüssige oder zähflüssige Produkte (2), insbesondere IBC (Intermediate Bulk Container), umfassend einen Rahmen (18) mit Füßen (3), welcher dazu eingerichtet ist, auf demselben die stabile Abstützung des Behälters, der in Bezug auf den Boden erhöht ist, aufzunehmen, **dadurch gekennzeichnet, dass** der Rahmen unter der Abstützungsebene (X) des Behälters einen Tank (4) umfasst, welcher als Zwischenpuffertank wirkt, welcher dazu vorgesehen ist, die Flüssigkeit des Behälters (2) aufzunehmen, bevor dieser drainiert wird, wobei der Tank (4) einen doppelten Boden aufweist: wobei der erste Boden (5) trichterförmig ist und in einem Abflussrohr (6) endet, und der zweite Boden (7) zusammen mit dem ersten Boden eine untere Kammer (8) bestimmt, welche geeignet ist, ein thermisches Fluid (10) zu enthalten, wobei das Abflussrohr, durch welches der Inhalt des Behälters nach außen übertragen werden kann, nachdem er durch den Tank gelaufen ist, durch die genannte untere Kammer (8) geht.

2. Station (1) zum Entleeren eines Schüttgutbehälters für flüssige oder zähflüssige Produkte nach Anspruch 1, **dadurch gekennzeichnet, dass** sie Heizmittel (9) umfasst, um die untere Kammer (8), welche das thermische Fluid (10) enthält, zu heizen.

3. Station (1) zum Entleeren eines Schüttgutbehälters für flüssige oder zähflüssige Produkte nach dem vorhergehenden Anspruch, **dadurch gekennzeichnet, dass** sie mit einem System (21) für die Kontrolle und Regulierung der Temperatur des in dem Tank (4) enthaltenen Fluids versehen ist, umfassend einen Temperaturfühler (20) für die Überprüfung der Temperatur in dem Tank (4) und Mittel für die Wirkung auf die Heizmittel (9), durch einen Thermostat, in Abhängigkeit von dem Wert des von dem Fühler erzeugten Signals.

4. Station (1) zum Entleeren eines Schüttgutbehälters für flüssige oder zähflüssige Produkte nach einem der vorhergehenden Ansprüche, **dadurch gekennzeichnet, dass** der untere Punkt der unteren Kammer (8) mit einer vertikalen Leitung (11) hydraulisch kommuniziert, welche mit einem Schauloch (12) versehen ist, um das Niveau des thermischen Fluids (10) in der unteren Kammer (8) zu messen.

5. Station (1) zum Entleeren eines Schüttgutbehälters für flüssige oder zähflüssige Produkte nach einem der vorhergehenden Ansprüche, **dadurch gekennzeichnet, dass** der Tank (4) einen oberen Deckel aufweist, welcher mit einer Öffnung für den Anschluss der Entleerleitung (14) des Behälters (2) und einer Öffnung zum Versehen des Tanks (4) mit einem Auslassabzug (13) versehen ist.

6. Station (1) zum Entleeren eines Schüttgutbehälters für flüssige oder zähflüssige Produkte nach dem vorhergehenden Anspruch, **dadurch gekennzeichnet, dass** der Auslassabzug (13) einen Luftkanal umfasst, an deren Basis ein schwinggabelartiger Niveaufühler (13a) installiert ist.

7. Station (1) zum Entleeren eines Schüttgutbehälters für flüssige oder zähflüssige Produkte nach einem der vorhergehenden Ansprüche, **dadurch gekennzeichnet, dass** für die Aufnahme auf demselben der stabilen Abstützung des Behälters (2), der Rahmen mit zumindest zwei Abstützrollen (15) versehen ist.

8. Station (1) zum Entleeren eines Schüttgutbehälters für flüssige oder zähflüssige Produkte nach einem der vorhergehenden Ansprüche, **dadurch gekennzeichnet, dass** der zweite Boden (7) durch einen unteren Deckel (16) aus Isoliermaterial thermisch isoliert ist.

## Revendications

1. Poste (1) de vidage d'un récipient (2) contenant un produit pâteux ou un fluide en vrac, particulièrement un IBC (récipient intermédiaire pour vrac), comprenant un châssis (18) avec des pattes (3) préparé pour recevoir sur celui-ci le support stable du récipient qui est élevé par rapport au sol, **caractérisé en ce que** le châssis comprend, sous le plan de support (X) du récipient, un réservoir (4) qui agit comme un réservoir tampon intermédiaire destiné à recevoir le fluide du récipient (2) avant que ce dernier soit évacué, le réservoir (4) ayant un double fond : dans lequel le premier fond (5) est sous forme d'entonnoir et termine en un bec (6), et le deuxième fond (7) conjointement avec le premier fond détermine une chambre (8) inférieure appropriée pour contenir un fluide (10) thermique, le bec à travers lequel le contenu du récipient peut être transféré à l'extérieur après être passé à travers le réservoir traverse ladite chambre (8) inférieure.

2. Poste (1) de vidage d'un récipient contenant un produit pâteux ou un fluide en vrac selon la revendication 1, **caractérisé en ce qu'**il comprend des moyens (9) thermiques pour réchauffer la chambre (8) inférieure contenant le fluide (10) thermique.

3. Poste (1) de vidage d'un récipient contenant un produit pâteux ou un fluide en vrac selon la revendication précédente, **caractérisé en ce qu'**il est équipé d'un système (21) de contrôle et de réglage de la température du fluide contenu dans le réservoir (4), comprenant une sonde (20) de température pour vérifier la température dans le réservoir (4) et des moyens pour agir sur les moyens (9) thermiques, par le biais d'un thermostat, en fonction de la valeur du signal généré par la sonde.

4. Poste (1) de vidage d'un récipient contenant un produit pâteux ou un fluide en vrac selon l'une quelconque des revendications précédentes, **caractérisé en ce que** le point inférieur de la chambre (8) inférieure communique hydrauliquement avec une conduite (11) verticale pourvue d'un trou (12) d'inspection pour mesurer le niveau de fluide (10) thermique dans la chambre (8) inférieure.

5. Poste (1) de vidage d'un récipient contenant un produit pâteux ou un fluide en vrac selon l'une quelconque des revendications précédentes, **caractérisé en ce que** le réservoir (4) a un couvercle supérieur pourvu d'une ouverture pour la connexion de la conduite (14) de vidage du récipient (2) et une ouverture pour fournir au réservoir (4) un évent (13).

6. Poste (1) de vidage d'un récipient contenant un produit pâteux ou un fluide en vrac selon la revendication précédente, **caractérisé en ce que** l'évent (13) comprend un conduit à la base duquel est installé un capteur (13a) de niveau de type diapason.

7. Poste (1) de vidage d'un récipient contenant un produit pâteux ou un fluide en vrac selon l'une quelconque des revendications précédentes, **caractérisé en ce que** pour recevoir sur celui-ci le support stable du récipient (2), le châssis est pourvu d'au moins deux rouleaux (15) de support.

8. Poste (1) de vidage d'un récipient contenant un produit pâteux ou un fluide en vrac selon l'une quelconque des revendications précédentes, **caractérisé en ce que** le deuxième fond (7) est isolé thermiquement par le biais d'un couvercle (16) inférieur de matériau isolant.
